# EUROPEAN PATENT APPLICATION

(11) **EP 4 129 901 A1**
(43) Date of publication of application: **08.02.2023**
(21) Application number: 21776420.8
(22) Date of filing: 15.03.2021
(51) Int. Cl.: C01B 25/14, H01M 4/62, H01M 10/052, H01M 10/0562, H01B 1/06, H01B 1/10, C04B 35/547, H01M 6/18

(54) **SULFIDE SOLID ELECTROLYTE, AND ELECTRODE MIXTURE, SOLID ELECTROLYTE LAYER AND BATTERY USING SAME**

(30) Priority: 23.03.2020 JP 2020051637
(71) Applicant: Mitsui Mining & Smelting Co., Ltd., Shinagawa-ku Tokyo 141-8584 (JP)
(72) Inventor: NAKAYAMA, Yuki, Ageo-shi, Saitama 362-0021 (JP); ITO, Takahiro, Ageo-shi, Saitama 362-0021 (JP); TAKAHASHI, Tsukasa, Ageo-shi, Saitama 362-0021 (JP)
(74) Representative: Novagraaf Technologies
(86) International application number: PCT/JP2021/010345
(87) International publication number: WO 2021/193192

(57) **Abstract**

There is provided a sulfide solid electrolyte containing elemental lithium (Li), elemental phosphorus (P), elemental sulfur (S), and an elemental halogen (X). The mole ratio of the elemental lithium (Li) to the elemental phosphorus (P), Li/P, satisfies 3.7 < Li/P < 5.4. The mole ratio of the elemental sulfur (S) to the elemental phosphorus (P), S/P, satisfies 3.9 < S/P < 4.1. The mole ratio of the elemental halogen (X) to the elemental phosphorus (P), X/P, satisfies 0.7 < X/P < 2.4. The sulfide solid electrolyte includes a crystalline phase having an argyrodite-type crystal structure.

## Description

### Technical Field

The present invention relates to a sulfide solid electrolyte. Also, the present invention relates to an electrode material mixture, a solid electrolyte layer, and a battery including the sulfide solid electrolyte.

### Background Art

The applicant of the present invention previously proposed a sulfide solid electrolyte including a compound represented by a compositional formula: Li₇₋ₓPS₆₋ₓHaₓ, where Ha represents Cl or Br, and x is 0.2 or more and 1.8 or less (see Patent Literature 1). This sulfide solid electrolyte has few sulfur defects and high crystallinity, and is therefore characterized by high lithium ionic conductivity, low electronic conductivity, and a high lithium ion transport number.

### Citation List

### Patent Literature

Patent Literature 1: US 2016/156064A1

### Summary of Invention

Conventionally known sulfide solid electrolytes may generate hydrogen sulfide when they are brought into contact with moisture in the air. Various sulfide solid electrolytes have been proposed in recent years, but further studies are required for a sulfide solid electrolyte that generates less hydrogen sulfide.

Therefore, an object of the present invention is to improve a sulfide solid electrolyte, and more particularly to provide a sulfide solid electrolyte that generates less hydrogen sulfide.

The present invention have achieved the object by providing a sulfide solid electrolyte containing elemental lithium (Li), elemental phosphorus (P), elemental sulfur (S), and an elemental halogen (X),
wherein a mole ratio of the elemental sulfur (S) to the elemental phosphorus (P), S/P, satisfies 3.5 < S/P < 4.1,
a mole ratio of the elemental halogen (X) to the elemental phosphorus (P), X/P, satisfies 0.7 < X/P < 2.4, and
the sulfide solid electrolyte includes a crystalline phase having an argyrodite-type crystal structure.

### Brief Description of Drawings

[Fig. 1] Fig. 1 shows X-ray diffraction patterns of sulfide solid electrolytes obtained in Examples 1 to 4 and Comparative Examples 1 and 2.
[Fig. 2] Fig. 2 shows X-ray diffraction patterns of sulfide solid electrolytes obtained in Examples 5 and 6 and Comparative Example 3.

### Description of Embodiments

Hereinafter, the present invention will be described based on preferred embodiments thereof. First, the sulfide solid electrolyte of the present invention will be described. The sulfide solid electrolyte of the present invention contains elemental lithium (Li), elemental phosphorus (P), elemental sulfur (S), and an elemental halogen (X). Examples of the elemental halogen (X) include elemental fluorine (F), elemental chlorine (Cl), elemental bromine (Br), and elemental iodine (I). The elemental halogen (X) may be one of these elements or may be a combination of two or more of these elements. The sulfide solid electrolyte preferably contains at least elemental bromine (Br), or more preferably elemental bromine (Br) and elemental chlorine (Cl), as the elemental halogen (X), in view of facilitating the formation of an argyrodite-type crystal structure, which will be described later, by a solid state reaction and in view of increasing the lithium ionic conductivity. In view of increasing the lithium ionic conductivity even more, the sulfide solid electrolyte may contain at least elemental iodine (I) as the elemental halogen (X), or the elemental halogen (X) may be elemental iodine (I).

In the case where the sulfide solid electrolyte contains elemental bromine (Br) and elemental chlorine (Cl) as the elemental halogen (X), the ratio of the number of moles of elemental bromine (Br) to the sum of the number of moles of elemental bromine (Br) and the number of moles of elemental chlorine (Cl), that is, the value of Br/(Br+Cl) is preferably 0.2 or more and 0.8 or less, more preferably 0.3 or more and 0.7 or less, and even more preferably 0.4 or more and 0.6 or less.

The introduction of bromine (Br) enables easily forming the argyrodite-type crystal structure; however it is conceivable that the amount of halogen dissolved in the argyrodite-type crystal structure will be small since bromine (Br) has a larger ionic radius than chlorine (Cl) and sulfur (S). Accordingly, by the appropriate adjustment of Br/(Br+Cl) as described above, the amount of elemental halogen dissolved in the argyrodite-type crystal structure can be increased while easily forming the argyrodite-type crystal structure. As a result, the lithium ionic conductivity of the sulfide solid electrolyte can be increased even more. An increase in the amount of halogen dissolved in the argyrodite-type crystal structure corresponds to a decrease in the occupancy of lithium sites in the crystal structure, which probably results in an improvement of the lithium ionic conductivity.

As a result of in-depth study of means to effectively suppress the generation of hydrogen sulfide from the sulfide solid electrolyte, the inventors of the present invention have found that it is effective to reduce the amount of elemental sulfur (S) that does not constitute a PS₄³⁻ unit contained in the sulfide solid electrolyte. In view of this, the inventors of the present invention have assumed that appropriately adjusting the ratios of elemental lithium (Li), elemental phosphorus (P), elemental sulfur (S), and the elemental halogen (X) contained in the sulfide solid electrolyte is effective in suppressing the generation of hydrogen sulfide. Then, as a result of further study, the inventors of the present invention have found that it is possible to even more effectively suppress the generation of hydrogen sulfide from the sulfide solid electrolyte by appropriately adjusting two ratios: (i) the mole ratio of elemental sulfur (S) to elemental phosphorus (P), S/P, and (ii) the mole ratio of the elemental halogen (X) to elemental phosphorus (P), X/P. Hereinafter, these two ratios will be described individually.

The value of S/P preferably satisfies 3.5 < S/P < 4.1. When the S/P is greater than 3.5, the formation of sulfur (S) that does not constitute a PS₄³⁻ unit (for example, P₂S₇⁴⁻ and P₂S₆⁴⁻) is advantageously suppressed, thereby reducing the amount of H₂S generated. When the S/P is smaller than 4.1, the formation of sulfur (S) that does not constitute a PS₄³⁻ unit (for example, S²⁻) is advantageously suppressed, thereby reducing the amount of H₂S generated. For example, these sulfur (S) species may be contained in the argyrodite-type crystal structure or may form as Li₂S. In view of these points, the value of S/P more preferably satisfies 3.70 < S/P < 4.08, and even more preferably 3.85 < S/P < 4.05. The value of S/P is measured by ICP emission spectroscopy.

The value of X/P preferably satisfies 0.7 < X/P < 2.4. When the X/P is greater than 0.7, the occupancy of lithium sites in the solid electrolyte is advantageously reduced, thereby improving the ionic conductivity. When the X/P is smaller than 2.4, the amount of LiX that forms as a different phase is advantageously reduced, thereby reducing the ionic conductivity. In view of these points, the value of X/P more preferably satisfies 1.0 < X/P < 2.0, and even more preferably 1.4 < X/P < 1.8. The value of X/P is measured in the same manner as for the value of S/P described above.

It is also effective to appropriately adjust (iii) the mole ratio of elemental lithium (Li) to elemental phosphorus (P), Li/P, in view of even more effectively suppressing the generation of hydrogen sulfide from the sulfide solid electrolyte. More specifically, the value of Li/P preferably satisfies 3.7 < Li/P < 5.4. When the Li/P is greater than 3.7, the lithium ionic conductivity is advantageously improved. When the Li/P is smaller than 5.4, the lithium ionic conductivity is also advantageously improved. In view of these points, the value of Li/P more preferable satisfies 3.9 < Li/P < 5.2, and even more preferably 4.2 < Li/P < 4.8. The value of Li/P is measured in the same manner as for the value of S/P described above.

A sulfide solid electrolyte having values of S/P, X/P, and Li/P within the above-described respective ranges can be produced, for example, according to a production method, which will be described later.

The sulfide solid electrolyte may contain another element in addition to elemental lithium (Li), elemental phosphorus (P), elemental sulfur (S), and the elemental halogen (X). For example, the elemental lithium (Li) may be partially replaced by another elemental alkali metal, the elemental phosphorus (P) may be partially replaced by another elemental pnictogen, and the elemental sulfur (S) may be partially replaced by another elemental chalcogen.

The sulfide solid electrolyte may contain unavoidable impurities in addition to the elemental lithium (Li), the elemental phosphorus (P), the elemental sulfur (S), and the elemental halogen (X) as long as the impurities do not impair the effects of the present invention. The amount of unavoidable impurities contained in the sulfide solid electrolyte may be, for example, at most less than 5 mol%, preferably less than 3 mol%, and more preferably less than 1 mol%, in view of ensuring that those impurities have little effect on the performance of the sulfide solid electrolyte.

Preferably, the sulfide solid electrolyte of the present invention is a crystalline compound. A crystalline compound refers to a substance that exhibits a diffraction peak assigned to a crystalline phase in X-ray diffractometry (XRD). The sulfide solid electrolyte preferably includes a crystalline phase particularly having an argyrodite-type crystal structure, in view of increasing the lithium ionic conductivity of the sulfide solid electrolyte.

An argyrodite-type crystal structure refers to a crystal structure of a family of compounds derived from a mineral represented by the chemical formula Ag₈GeS₆. An argyrodite-type compound having elemental lithium (Li), elemental phosphorus (P), elemental sulfur (S), and an elemental halogen (X) has a structure in which the elemental lithium (Li), the elemental sulfur (S), and the elemental halogen (X) are present around the PS₄³⁻ structure as the main framework. Particularly, a sulfide solid electrolyte having an argyrodite-type crystal structure has high lithium ionic conductivity, but is more likely to generate hydrogen sulfide than other sulfide solid electrolytes when exposed to the air, due to the presence of highly reactive elemental sulfur (S) in its crystal structure.

Whether or not a sulfide solid electrolyte has a crystalline phase having an argyrodite-type crystal structure can be determined by, for example, XRD. For example, in a diffraction pattern determined using an X-ray diffractometer with CuKα1 radiation, a crystalline phase having an argyrodite-type crystal structure exhibits characteristic peaks at 2θ = 15.3° ± 1.0°, 17.7° ± 1.0°, 25.2° ± 1.0°, 30.0° ± 1.0°, 30.9° ± 1.0°, and 44.3° ± 1.0°. Depending on the element species constituting the sulfide solid electrolyte, the crystal phase may also exhibit characteristic diffraction peaks at 2θ = 47.2° ± 1.0°, 51.7° ± 1.0°, 58.3° ± 1.0°, 60.7° ± 1.0°, 61.5° ± 1.0°, 70.4° ± 1.0°, and 72.6° ± 1.0°, in addition to the above-described diffraction peaks. Data of PDF No. 00-034-0688 can be used to identify diffraction peaks derived from an argyrodite-type crystal structure.

As described above, the sulfide solid electrolyte preferably has a crystalline phase having an argyrodite-type crystal structure. In addition, it is preferable that the sulfide solid electrolyte should not have a crystalline phase having any other crystal structure, or the abundance of a crystalline phase having another crystal structure is preferably low, if any. For example, in an X-ray diffraction pattern determined using an X-ray diffractometer with CuKα1 radiation, a diffraction peak may be observed at a position of 2θ = 21.3° ± 0.3°, but the diffraction peak at this position is not derived from the argyrodite-type crystal structure. Sulfide solid electrolytes that exhibit a diffraction peak at this position tend to have lower lithium ionic conductivity than sulfide solid electrolytes that do not exhibit this diffraction peak. Therefore, in view of increasing the lithium ionic conductivity of the sulfide solid electrolyte, it is preferable to control the presence of crystalline phases in the sulfide solid electrolyte such that the ratio of Iₐ to I₀, Iₐ/I₀, is preferably 2.3 or less, where Iₐ is the maximum intensity of a diffraction peak A observed at a position of 2θ = 21.3° ± 0.3°, and I₀ is a background in the X-ray diffraction pattern. The value of Iₐ/I₀ is more preferably 1.9 or less, and even more preferably 1.6 or less. A smaller value of Iₐ/I₀ is more advantageous in improving lithium ionic conductivity, and ideally the value of Iₐ/I₀ is zero.

The background I₀ is defined as the intensity at a position where no crystalline phase peak is observed, and, for example, the intensity with the lowest count within a range of 2θ = 20.3° ± 1.0° can be used as the background intensity I₀.

From the same viewpoint as described above, it is preferable to control the presence of crystalline phases included in the sulfide solid electrolyte such that the ratio of I_{A} to I_{B}, I_{A}/I_{B}, is preferably 0.2 or less, where I_{A} is a value obtained by subtracting the background I₀ from the maximum peak intensity Iₐ of the diffraction peak A observed at a position of 2θ = 21.3° ± 0.3°, and I_{B} is a value obtained by subtracting the background I₀ from the maximum intensity I_{b} of a diffraction peak B observed at a position of 2θ = 30.0° ± 1.0° (this diffraction peak is assigned to the argyrodite-type crystal structure). The value of I_{A}/I_{B} is more preferably 0.1 or less, and even more preferably 0.06 or less. A smaller value of I_{A}/I_{B} is more advantageous in improving lithium ionic conductivity, and ideally the value of I_{A}/I_{B} is zero.

Not only for the above-described crystal structure exhibiting a diffraction peak at a position of 2θ = 21.3° ± 0.3°, it is also preferable, for example, that the sulfide solid electrolyte should not have a crystalline phase of Li₃PS₄, or the abundance of this crystalline phase is preferably low, if any. For example, when the sulfide solid electrolyte has a crystalline phase of β-Li₃PS₄ or γ-Li₃PS₄, a diffraction peak may be observed at a position of 2θ = 22.8° ± 0.5° in an X-ray diffraction pattern determined using an X-ray diffractometer with CuKα1 radiation. Sulfide solid electrolytes that exhibit a diffraction peak at this position tend to have lower lithium ionic conductivity than sulfide solid electrolytes that do not exhibit this diffraction peak. Therefore, in view of increasing the lithium ionic conductivity of the sulfide solid electrolyte even more, it is preferable to control the presence of crystalline phases in the sulfide solid electrolyte such that the ratio of I_{c} to I₀, I_{c}/I₀, is preferably 2.5 or less, where I_{c} is the maximum intensity of a diffraction peak C observed at a position of 2θ = 22.8° ± 0.5°, and I₀ is the background in the X-ray diffraction pattern. The value of I_{c}/I₀ is more preferably 2.0 or less, and even more preferably 1.7 or less. A smaller value of I_{c}/I₀ is more advantageous in improving lithium ionic conductivity, and ideally the value of I_{c}/I₀ is zero. The background I₀ is defined as described above.

In view of increasing the lithium ionic conductivity of the sulfide solid electrolyte even more, it is preferable to control the presence of crystalline phases included in the sulfide solid electrolyte such that the ratio of I_{C} to I_{B}, I_{C}/I_{B}, is preferably 0.5 or less, where I_{C} is a value obtained by subtracting the background I₀ from the maximum peak intensity I_{c} of the diffraction peak C observed at a position of 2θ = 22.8° ± 0.5°, and I_{B} is a value obtained by subtracting the background I₀ from the maximum intensity I_{b} of the diffraction peak B observed at a position of 2θ = 30.0° ± 1.0°. The value of I_{C}/I_{B} is more preferably 0.2 or less, and even more preferably 0.1 or less. A smaller value of I_{C}/I_{B} is more advantageous in improving lithium ionic conductivity, and ideally the value of I_{C}/I_{B} is zero.

It is also preferable that the sulfide solid electrolyte should not have a crystalline phase of, for example, Li₂S, or the abundance of the crystalline phase of Li₂S is preferably low, if any. For example, when the sulfide solid electrolyte has the crystalline phase of Li₂S, a diffraction peak may be observed at a position of 2θ = 27.0° ± 0.5° in an X-ray diffraction pattern determined using an X-ray diffractometer with CuKα1 radiation. Sulfide solid electrolytes that exhibit a diffraction peak at this position tend to have lower lithium ionic conductivity and also tend to generate a larger amount of H₂S, than sulfide solid electrolytes that do not exhibit this diffraction peak. Therefore, in view of increasing the lithium ionic conductivity of the sulfide solid electrolyte even more and suppressing the generation of H₂S, it is preferable to control the presence of crystalline phases in the sulfide solid electrolyte such that the ratio of I_{d} to I₀, I_{d}/I₀, is preferably 5.0 or less, where I_{d} is the maximum intensity of a diffraction peak D observed at a position of 2θ = 27.0° ± 0.5°, and I₀ is the background in the X-ray diffraction pattern. The value of I_{d}/I₀ is more preferably 4.0 or less, even more preferably 3.0 or less, and yet even more preferably 2.7 or less. A smaller value of I_{d}/I₀ is more advantageous in improving lithium ionic conductivity and suppressing the generation of H₂S, and ideally the value of I_{d}/I₀ is zero. The background I₀ is defined as described above.

In view of increasing the lithium ionic conductivity of the sulfide solid electrolyte yet even more and suppressing the generation of H₂S even more, it is preferable to control the presence of crystalline phases included in the sulfide solid electrolyte such that the ratio of I_{D} to I_{B}, I_{D}/I_{B}, is preferably 1.0 or less, where I_{D} is a value obtained by subtracting the background I₀ from the maximum peak intensity I_{d} of the diffraction peak D observed at a position of 2θ = 27.0° ± 0.5°, and I_{B} is a value obtained by subtracting the background I₀ from the maximum intensity I_{b} of the diffraction peak B observed at a position of 2θ = 30.0° ± 1.0°. The value of I_{D}/I_{B} is more preferably 0.8 or less, even more preferably 0.6 or less, and yet even more preferably 0.45 or less. A smaller value of I_{D}/I_{B} is more advantageous in improving lithium ionic conductivity, and ideally the value of I_{D}/I_{B} is zero.

The sulfide solid electrolyte may contain LiX, which is a compound composed of elemental lithium (Li) and the elemental halogen (X). In view of increasing the lithium ionic conductivity, the amount of LiX present in the sulfide solid electrolyte is preferably 50 mass% or less, more preferably 30 mass% or less, and even more preferably 15 mass% or less.

Also, the sulfide solid electrolyte preferably exhibits only one diffraction peak within a range of 2θ = 25.2° ± 1.0° in the X-ray diffraction pattern thereof. The fact that only one diffraction peak is observed within this range is also evidence that the sulfide solid electrolyte does not have any crystalline phase other than that having the argyrodite-type crystal structure, and the lithium ionic conductivity of the sulfide solid electrolyte is thus improved.

As described above, the sulfide solid electrolyte has a crystalline phase having an argyrodite-type crystal structure. It is preferable that this crystalline phase should not have an excessively large crystallite size, in view of ensuring good contact with an active material when the sulfide solid electrolyte is used in a solid-state battery. From this viewpoint, the crystallite size of the crystalline phase having the argyrodite-type crystal structure is preferably 60 nm or less, more preferably 50 nm or less, even more preferably 40 nm or less, and yet even more preferably 30 nm or less. The lower limit value of the crystallite size is preferably 1 nm, more preferably 5 nm, and even more preferably 10 nm. The method for measuring the crystallite size will be described in detail in "Examples" later.

A sulfide solid electrolyte that satisfies the above-described conditions with respect to XRD diffraction peaks can be produced using the production method that will be described later, for example.

The sulfide solid electrolyte of the present invention has lithium ionic conductivity in a solid state. The sulfide solid electrolyte preferably has, at room temperature (that is, 25°C), a lithium ionic conductivity of 0.5 mS/cm or more, more preferably 1.0 mS/cm or more, and even more preferably 1.5 mS/cm or more. The lithium ionic conductivity can be measured using a method described in "Examples", which will be described later.

Next, a preferred method for producing the sulfide solid electrolyte of the present invention will be described. Preferably, the sulfide solid electrolyte is produced by mechanical milling of a mixture of predetermined starting materials. It is also possible to synthesize the sulfide solid electrolyte by a solid phase reaction involving heating. However, in this case, care should be taken because volatilization of the starting materials and side reactions may occur before the argyrodite-type crystal structure stabilizes, resulting in the formation of a crystalline phase that exhibits low lithium ionic conductivity.

The starting materials refer to substances containing the elements that are to constitute the sulfide solid electrolyte, and more specifically, refer to a compound containing elemental lithium (Li), a compound containing elemental sulfur (S), a compound containing elemental phosphorus (P), and a compound containing an elemental halogen (X).

Examples of the compound containing elemental lithium (Li) include lithium compounds such as lithium sulfide (Li₂S), lithium oxide (Li₂O), and lithium carbonate (Li₂CO₃), and the simple substance of lithium metal.

Examples of the compound containing elemental sulfur (S) include phosphorus sulfides such as phosphorus trisulfide (P₂S₃) and phosphorus pentasulfide (P₂S₅). In addition, the simple substance of sulfur (S) can also be used as the compound containing elemental sulfur (S).

Examples of the compound containing elemental phosphorus (P) include phosphorus sulfides such as phosphorus trisulfide (P₂S₃) and phosphorus pentasulfide (P₂S₅), phosphorus compounds such as sodium phosphate (Na₃PO₄), and the simple substance of phosphorus.

Examples of the compound containing the element X (halogen) include compounds formed by one or more elements selected from the group consisting of elemental fluorine (F), elemental chlorine (Cl), elemental bromine (Br), and elemental iodine (I) and one or more elements selected from the group consisting of elemental sodium (Na), elemental lithium (Li), elemental boron (B), elemental aluminum (Al), elemental silicon (Si), elemental phosphorus (P), elemental sulfur (S), elemental germanium (Ge), elemental arsenic (As), elemental selenium (Se), elemental tin (Sn), elemental antimony (Sb), elemental tellurium (Te), elemental lead (Pb), and elemental bismuth (Bi), and such compounds may optionally include oxygen or sulfur bonded thereto. More specifically, examples of the compound containing the elemental halogen include lithium halides such as LiF, LiCl, LiBr, and LiI, phosphorus halides such as PF₃, PF₅, PCl₃, PCl₅, POCl₃, PBr₃, POBr₃, PI₃, P₂Cl₄, and P₂I₄, sulfur halides such as SF₂, SF₄, SF₆, S₂F₁₀, SCl₂, S₂Cl₂, and S₂Br₂, sodium halides such as NaI, NaF, NaCl, and NaBr, boron halides such as BCl₃, BBr₃, and BI₃. These compounds may be used singly, or in combinations of two or more thereof. Among others, a lithium halide (LiX, where X represents halogen) is preferably used.

The above-described starting materials are mixed and subjected to mechanical milling. In mixing the starting materials, the amounts of the respective starting materials added are adjusted such that the composition of the desired sulfide solid electrolyte is obtained, or in other words, the values of the above-described ratios Li/P, S/P, and X/P satisfy the above-described ranges.

For the mechanical milling, an attritor, a paint shaker, a planetary ball mill, a ball mill, a bead mill, or a homogenizer can be used, for example. For the mechanical milling using any of these devices, it is advantageous to vigorously agitate the mixed powder of the starting materials to provide a large amount of energy thereto. It is not easy to quantitatively express the milling energy; however, for example, in the case where the mechanical milling is performed using a planetary ball mill, the mass ratio of the starting materials to a liquid medium (starting material/liquid medium) can be 0.1 or more and 1.0 or less, the ball diameter can be 0.5 mm or more and 100 mm or less, the number of revolutions of the device can be 120 rpm or more and 700 rpm or less, and the processing time can be 1 hour or longer and 200 hours or shorter.

The mechanical milling of the mixed powder of the starting materials causes a mechanochemical reaction, and thus, a sulfide solid electrolyte including a crystalline phase having an argyrodite-type crystal structure can be obtained. Furthermore, mechanical milling is advantageously unlikely to form a crystalline phase having a crystal structure other than an argyrodite-type crystal structure. The sulfide solid electrolyte obtained can be subjected to known aftertreatment such as the adjustment of the particle size, and then, can be used as is for a desired purpose. The sulfide solid electrolyte obtained may also be subjected to a heating step to stabilize the argyrodite-type crystal structure even more.

A container with or without a lid may be used for the heating, and the container preferably allows a gas to flow between the inside and the outside of the container, rather than an airtight container such as a sealed tube. Examples of such container include a sagger made of a material such as carbon, alumina, zirconia, or silicon carbide.

In view of avoiding change of the argyrodite-type crystal structure that has been formed by mechanical milling to another crystal structure, the heating is not necessarily needed. The heating, if any, is preferably performed under gentle conditions. In view of this, the heating temperature, or in other words, the highest temperature reached by the object to be heated, is preferably a relatively low temperature of 100°C or more and 600°C or less, more preferably 150°C or more and 500°C or less, and even more preferably 200°C or more and 450°C or less.

The heating time is preferably 1 hour or longer and 10 hours or shorter, more preferably 2 hours or longer and 8 hours or shorter, and even more preferably 3 hours or longer and 6 hours or shorter.

In view of reducing uneven heating, the temperature increase rate during the heating is preferably 300°C/h or less. In particular, the temperature increase rate is more preferably 50°C/h or more and 250°C/h or less, and even more preferably 100°C/h or more and 200°C/h or less, also taking the maintenance of the heating efficiency into account.

In view of avoiding change of the argyrodite-type crystal structure that has been formed by mechanical milling to another crystal structure, the heating atmosphere is preferably an inert gas atmosphere. For example, it is preferable to perform the heating in an argon atmosphere or a nitrogen atmosphere.

After the heating, the resulting product may be crushed or pulverized as necessary, and may furthermore be classified as necessary. For example, it is preferable to pulverize or crush the resulting product using, for example, a pulverizer such as a planetary ball mill, a vibration mill, or a tumbling mill, or a kneader.

The sulfide solid electrolyte obtained in this manner can be used alone or in a combination with another solid electrolyte. It is preferable that the sulfide solid electrolyte preferably has a D₅₀ of 0.1 µm or more and 150 µm or less in the volume-weighted particle size distribution as determined by a laser diffraction scattering particle size distribution analysis. When the D₅₀ of the sulfide solid electrolyte is 0.1 µm or more, an excessive increase in the surface area of the sulfide solid electrolyte can be suppressed to prevent an increase in resistance, and mixing of the sulfide solid electrolyte with an active material can also be facilitated. On the other hand, when the D₅₀ of the sulfide solid electrolyte is 150 µm or less, closest packing of two solid electrolytes is likely to be achieved in the case where the solid electrolyte of the present invention is used in a combination with another solid electrolyte, for example. The closest packing of the two solid electrolytes can increase the number of contact points and the contact area therebetween to thereby improve the lithium ionic conductivity. In view of these, the D₅₀ of the sulfide solid electrolyte is, for example, preferably 0.3 µm or more, and more preferably 0.5 µm or more. On the other hand, the D₅₀ of the sulfide solid electrolyte is, for example, preferably 250 µm or less, more preferably 70 µm or less, and even more preferably 50 µm or less.

The sulfide solid electrolyte of the present invention can be used as a material for a solid electrolyte layer, a positive electrode layer, or a negative electrode layer. Specifically, the sulfide solid electrolyte of the present invention can be used for a battery that has a positive electrode layer, a negative electrode layer, and a solid electrolyte layer between the positive electrode layer and the negative electrode layer. That is to say, the sulfide solid electrolyte of the present invention can be used for a so-called solid-state battery. More specifically, the sulfide solid electrolyte of the present invention can be used for a lithium solid-state battery. The lithium solid-state battery may be a primary battery or a secondary battery. There is no particular limitation on the shape of the battery, and the battery may be a laminate-type battery, a cylindrical battery, or a rectangular battery, for example. The term "solid-state battery" encompasses a solid-state battery that does not contain any liquid substance or gel substance as the electrolyte, and also a battery that contains a liquid substance or a gel substance as the electrolyte in an amount of, for example, 50 mass% or less, 30 mass% or less, or 10 mass% or less.

In the case where the sulfide solid electrolyte of the present invention is contained in a solid electrolyte layer, the solid electrolyte layer can be produced in the following manner, for example: a coating film is formed on a substrate using, for example, a method in which a slurry containing the sulfide solid electrolyte, a binder, and a solvent is dripped onto the substrate and leveled off with a doctor blade or the like; a method in which the substrate and the slurry are brought into contact with each other, followed by cutting with an air knife; or a screen printing method; and then the solvent is removed from the coating film by heat drying. Alternatively, the solid electrolyte layer can be produced by forming the sulfide solid electrolyte in powder form into a green compact by pressing or the like, and then appropriately processing the green compact.

Typically, the thickness of the solid electrolyte layer is preferably 5 µm or more and 300 µm or less, and more preferably 10 µm or more and 100 µm or less, in view of the balance between the prevention of short circuit and the volumetric capacity density.

The sulfide solid electrolyte of the present invention can be used in a combination with an active material to provide an electrode material mixture. The ratio of the sulfide solid electrolyte in the electrode material mixture is typically 10 mass% or more and 50 mass% or less. The electrode material mixture may also contain other materials such as a conductive aid and a binder when necessary. A positive electrode layer and a negative electrode layer can be formed by mixing the electrode material mixture and a solvent to prepare a paste, applying the paste to a current collector such as aluminum foil, and drying the applied paste.

As a positive electrode material for the positive electrode layer, a positive electrode material that is conventionally used as a positive electrode active material for lithium secondary batteries can be used as appropriate. Examples thereof include positive electrode active materials containing lithium, and more specifically, a spinel-type lithium transition metal oxide, and a lithium metal oxide having a layered structure. When the positive electrode material used is a high-voltage positive electrode material, the energy density can be increased. In addition to the positive electrode active material, the positive electrode material may contain a conductive material and other materials.

As a negative electrode material for the negative electrode layer, a negative electrode material that is conventionally used as a negative electrode active material for lithium ion batteries can be used as appropriate. Since the sulfide solid electrolyte of the present invention is electrochemically stable, the negative electrode material used may be lithium metal, or a carbon-based material such as graphite, artificial graphite, natural graphite, or non-graphitizable carbon (hard carbon), which is a material that charges and discharges at a low potential (about 0.1 V vs. Li⁺/Li) comparable to that of lithium metal. The energy density of the solid-state battery can be significantly increased in this manner. Silicon or tin, which is promising as a high-capacity material, can also be used as the active material. As a battery that includes a common electrolytic solution is charged and discharged, the electrolytic solution reacts with an active material, causing corrosion on the surface of the active material, and thus, the battery characteristics markedly deteriorate. By contrast, in a battery that includes the sulfide solid electrolyte of the present invention instead of the electrolytic solution, and also includes silicon or tin as the negative electrode active material, the above-described corrosion reaction does not occur, and the durability of the battery can be improved accordingly. The negative electrode material may also contain a conductive material and other materials, in addition to the negative electrode active material.

### Examples

Hereinafter, the present invention will be described in greater detail by way of examples. However, the scope of the present invention is not limited to the examples below. Hereinafter, "%" means "mass%" unless otherwise specified.

### Example 1

A lithium sulfide (Li₂S) powder, a phosphorus pentasulfide (P₂S₅) powder, a lithium chloride (LiCl) powder, and a lithium bromide (LiBr) powder were weighed so that the composition shown in Table 1 below was achieved (total amount of powders: 5 g). To these powders, 10 mL of heptane was added to prepare a slurry. The slurry was placed in a planetary ball mill having a volume of 80 mL. ZrO₂ balls having a diameter of 10 mm were used as a medium. The mass ratio of the starting material powders to the medium (starting material powders/medium) was 0.05. The conditions of the operation of the ball mill were as follows: mechanical milling was performed at 370 rpm for 50 hours. In this manner, a sulfide solid electrolyte was obtained. The obtained solid electrolyte had a lithium ionic conductivity of 1.6× 10⁻³ S/cm. The method for measuring the lithium ionic conductivity is described in "Evaluation 4" below.

### Examples 2 to 6 and Comparative Examples 1 to 3

Sulfide solid electrolytes were obtained in the same manner as in Example 1, except that a lithium sulfide (Li₂S) powder, a phosphorus pentasulfide (P₂S₅) powder, a lithium chloride (LiCl) powder, and a lithium bromide (LiBr) powder were mixed so that the compositions shown in Table 1 below were achieved. The solid electrolytes of Examples 2, 3, and 4 had ionic conductivities of 1.75×10⁻³ S/cm, 9.25×10⁻⁴ S/cm, and 1.57×10⁻³ S/cm, respectively. The solid electrolytes of Examples 5 and 6 had ionic conductivities of 1.48×10⁻³ S/cm and 6.03×10⁻⁴ S/cm, respectively.

### Evaluation 1

The sulfide solid electrolytes obtained in Examples and Comparative Examples were subjected to elementary analysis using ICP emission spectroscopy, and the mole ratios Li/P, S/P, and X/P were calculated. In Example 1, the mole ratios Li/P, S/P, and X/P were 4.83, 3.90, and 1.96, respectively. In Example 2, the mole ratios Li/P, S/P, and X/P were 4.34, 3.85, and 1.58, respectively.

### Evaluation 2

The sulfide solid electrolytes obtained in Examples and Comparative Examples were subjected to XRD, and the values of Iₐ/I₀, I_{c}/I₀, I_{d}/I₀, I_{A}/I_{B}, I_{C}/I_{B}, and I_{D}/I_{B} were calculated. Table 1 shows the results.

Furthermore, the number of peaks observed within a range of 2θ = 25.19° ± 1.00° was determined. The number of peaks was one in all of Examples.

The XRD of the sulfide solid electrolytes of Examples 1 to 4 and Comparative Examples 1 and 2 was performed using an X-ray diffractometer "Smart Lab" manufactured by Rigaku Corporation. The measurement conditions were as follows: no atmospheric exposure; scan axis: 2θ/θ; scan range: from 10° to 140°; step width: 0.01°; and scan speed: 1°/min. An atmosphere separator (for powder) manufactured by Rigaku Corporation was used as a cell for no atmospheric exposure. The material of the dome was polycarbonate, and the atmosphere was Ar.

CuKα1 radiation using a Johansson type crystal was used as the X-ray source. A one-dimensional detector was used for the detection. The XRD was performed such that the intensity at 21.3 ± 1.0° was 100 counts or more and 700 counts or less and such that the maximum peak intensity within the range from 10° to 140° was 1000 counts or more.

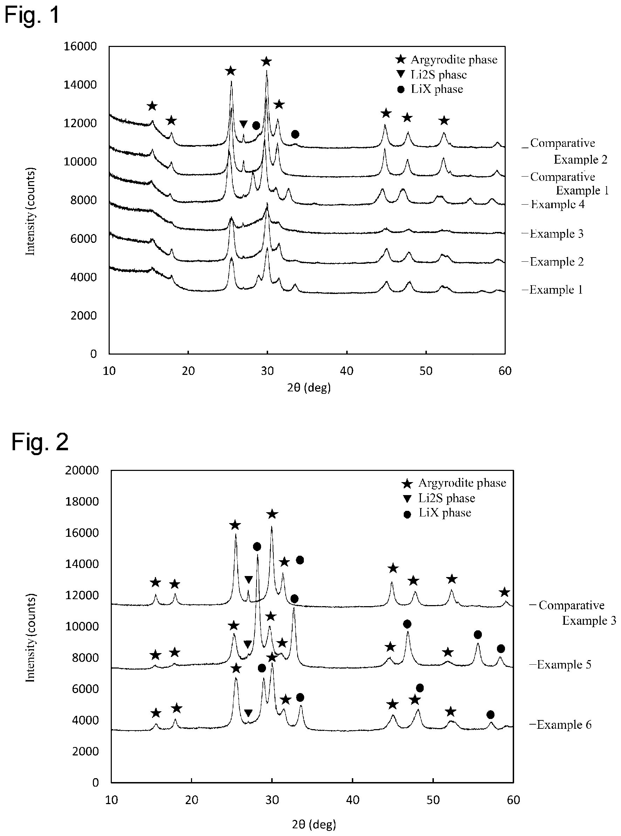

Fig. 1 shows X-ray diffraction patterns of Examples 1 to 4 and Comparative Examples 1 and 2. The X-ray diffraction pattern of Example 1 is offset by +3000 counts relative to the measured values. The X-ray diffraction patterns of Examples 2 to 4 and Comparative Examples 1 and 2 are offset by +1500 counts relative to the offset X-ray diffraction pattern of Example 1.

Furthermore, the obtained X-ray diffraction patterns were loaded into PDXL (a program manufactured by Rigaku Corporation), and, for each of the sulfide solid electrolytes obtained in Examples and Comparative Examples, the crystallite size of a crystalline phase having an argyrodite-type crystal structure was calculated using a WPPF method. Instrument-derived parameters were corrected using a standard sample. Table 1 shows the results.

The XRD of the sulfide solid electrolytes of Examples 5 and 6 and Comparative Example 3 was performed using an X-ray diffractometer "Smart Lab SE" manufactured by Rigaku Corporation. The measurement conditions were as follows: no atmospheric exposure; scan axis: 2θ/θ; scan range: from 10° to 120°; step width: 0.02°; and scan speed: 1°/min. An airtight holder (A00012149) for ASC manufactured by Rigaku Corporation was used as a cell for no atmospheric exposure. The airtight cover was made of a transparent airtight film, and the atmosphere was Ar. CuKα1 radiation using a Johansson type crystal was used as the X-ray source. The tube voltage was 40 kV, and the tube current was 80 mA. A one-dimensional detector was used for the detection. The XRD was performed such that the intensity at 21.3 ± 1.0° was 100 counts or more and 700 counts or less and such that the maximum peak intensity within the range from 10° to 140° was 1000 counts or more. Fig. 2 shows X-ray diffraction patterns of Examples 5 and 6 and Comparative Example 3. The X-ray diffraction pattern of Example 5 is offset by +7000 counts relative to the measured values. The X-ray diffraction pattern of Example 6 is offset by +3000 counts relative to the measured values. The X-ray diffraction pattern of Comparative Example 3 is offset by +11000 counts relative to the measured values. Furthermore, the obtained X-ray diffraction patterns were loaded into Smart Lab Studio II, and, for each of the sulfide solid electrolytes obtained in Examples and Comparative Example, the crystallite size of a crystalline phase having an argyrodite-type crystal structure was calculated using the WPPF method. Instrument-derived parameters were corrected using a standard sample.

### Evaluation 3

For each of the sulfide solid electrolytes obtained in Examples and Comparative Examples, the amount of hydrogen sulfide generated was measured using a method described below. Table 1 shows the results.

In a glove box purged with a sufficiently dried argon gas (dew point: -60°C or less), 2 mg of a sulfide solid electrolyte was weighed out and placed in a pouch sealed with a laminate film. A 1500-cm³ glass separable flask was placed in a thermo-hygrostat chamber containing an atmosphere kept at room temperature (25°C) with a dew point of -30°C adjusted by mixing dry air and atmospheric air. The separable flask was kept until the environment of the inside thereof became the same as the environment in the thermo-hygrostat chamber. Then, the sealed pouch containing the sulfide solid electrolyte was opened in the thermo-hygrostat chamber, and the sulfide solid electrolyte was quickly transferred into the separable flask. A fan was installed in the separable flask in order to prevent stagnation of the gas, and the atmosphere in the separable flask was stirred by rotating the fan. The separable flask was sealed, and 30 minutes later, the concentration of hydrogen sulfide generated during the 30 minutes immediately after the sealing of the separable flask was measured using a hydrogen sulfide sensor (GX-2009 manufactured by Riken Keiki Co., Ltd.). The minimum reading of the hydrogen sulfide sensor is 0.1 ppm.

### Evaluation 4

The lithium ionic conductivities of the sulfide solid electrolytes obtained in Examples and Comparative Examples were measured using the following method.

A sulfide solid electrolyte was uniaxially pressed by applying a load of about 6 t/cm² in a glove box purged with a sufficiently dried argon gas (dew point: -60°C or less), to thereby produce a sample for the measurement of the lithium ionic conductivity, which was a pellet with a diameter of 10 mm and a thickness of about 1 to 8 mm. The measurement of the lithium ionic conductivity was performed using Solartron 1255B manufactured by Toyo Corporation. The measurement conditions were as follows: an AC impedance method was performed at a temperature of 25°C, a frequency of 100 Hz to 1 MHz, and an amplitude of 100 mV.

**Table 1**

| | Composition | Composition ratio | | | XRD measurement | | | | | | | Amount of generated hydrogen sulfide (ppm) |
|---|---|---|---|---|---|---|---|---|---|---|---|---|
| | | S/P | X/P | Li/P | Iₐ/I₀ | I_{c}/I₀ | I_{d}/I₀ | I_{A}/I_{B} | I_{C}/I_{B} | I_{D}/I_{B} | Crystallite size (nm) | |
| Ex. 1 | Li_{5.0}PS_{4.0}ClBr | 4.0 | 2.0 | 5.0 | 1.27 | 1.24 | 1.88 | 0.03 | 0.03 | 0.11 | 16.7 | 0 |
| Ex. 2 | Li_{4.6}PS_{4.0}Cl_{0.8}Br_{0.8} | 4.0 | 1.6 | 4.6 | 1.39 | 1.38 | 2.07 | 0.04 | 0.04 | 0.10 | 20.0 | 0 |
| Ex. 3 | Li_{3.8}PS_{4.0}Cl_{0.4}Br_{0.4} | 4.0 | 0.8 | 3.8 | 1.30 | 1.23 | 2.06 | 0.10 | 0.08 | 0.36 | 14.4 | 0 |
| Ex. 4 | Li_{4.6}PS_{4.0}Br_{1.6} | 4.0 | 1.6 | 4.6 | 1.35 | 1.48 | 2.34 | 0.04 | 0.05 | 0.14 | 16.4 | 0 |
| Ex. 5 | Li_{5.3}PS_{4.0}Cl_{1.15}Br_{1.15} | 4.0 | 2.3 | 5.3 | 1.30 | 1.31 | 2.15 | 0.03 | 0.03 | 0.12 | 15.2 | 0.2 |
| Ex. 6 | Li_{5.3}PS_{4.0}Br_{2.3} | 4.0 | 2.3 | 5.3 | 1.15 | 1.22 | 2.64 | 0.03 | 0.05 | 0.36 | 11.7 | 0 |
| Com. Ex. 1 | Li_{5.4}PS_{4.4}Cl_{0.8}Br_{0.8} | 4.4 | 1.6 | 5.4 | 1.27 | 1.33 | 3.70 | 0.02 | 0.02 | 0.19 | 19.5 | 1.50 |
| Com. Ex. 2 | Li_{5.2}PS_{4.2}Cl_{0.9}Br_{0.9} | 4.2 | 1.8 | 5.2 | 1.30 | 1.41 | 3.36 | 0.02 | 0.03 | 0.17 | 19.1 | 0.80 |
| Com. Ex. 3 | Li_{5.4}PS_{4.4}Cl_{0.8}Br_{0.8} | 4.4 | 1.6 | 5.4 | 1.25 | 1.30 | 3.83 | 0.02 | 0.02 | 0.20 | 18.3 | 1.50 |

As can be clearly seen from the results shown in Table 1, the sulfide solid electrolytes obtained in Examples each generated an extremely smaller amount of hydrogen sulfide of than those in Comparative Examples.

### Industrial Applicability

According to the present invention, a sulfide solid electrolyte that generates less hydrogen sulfide is provided.

## Claims

1. A sulfide solid electrolyte comprising elemental lithium (Li), elemental phosphorus (P), elemental sulfur (S), and an elemental halogen (X),
wherein a mole ratio of the elemental sulfur (S) to the elemental phosphorus (P), S/P, satisfies 3.5 < S/P < 4.1,
a mole ratio of the elemental halogen (X) to the elemental phosphorus (P), X/P, satisfies 0.7 < X/P < 2.4, and
the sulfide solid electrolyte includes a crystalline phase having an argyrodite-type crystal structure.

2. The sulfide solid electrolyte according to claim 1, wherein, in an X-ray diffraction pattern determined using an X-ray diffractometer (XRD) with CuKα1 radiation, a ratio of Iₐ to I₀, Iₐ/I₀, is 2.3 or less, where Iₐ is a maximum intensity of a diffraction peak A observed at a position of 2θ = 21.3° ± 0.3°, and I₀ is a background in the X-ray diffraction pattern.

3. The sulfide solid electrolyte according to claim 1 or 2, comprising elemental bromine (Br) as the elemental halogen (X).

4. The sulfide solid electrolyte according to any one of claims 1 to 3, wherein the crystalline phase having the argyrodite-type crystal structure has a crystallite size of 60 nm or less.

5. An electrode material mixture comprising the sulfide solid electrolyte according to any one of claims 1 to 4 and an active material.

6. A solid electrolyte layer comprising the sulfide solid electrolyte according to any one of claims 1 to 4.

7. A battery comprising a positive electrode layer, a negative electrode layer, and a solid electrolyte layer between the positive electrode layer and the negative electrode layer, wherein the battery contains the sulfide solid electrolyte according to any one of claims 1 to 4.
